# EUROPEAN PATENT APPLICATION

(11) **EP 4 685 346 A1**
(43) Date of publication of application: **28.01.2026**
(21) Application number: 23928584.4
(22) Date of filing: 20.03.2023
(51) Int. Cl.: F02D 29/02, F02N 11/08

(54) **VEHICLE CONTROL DEVICE, CONTROL METHOD, AND SADDLED VEHICLE**

(71) Applicant: HONDA MOTOR CO., LTD., Tokyo 105-8404 (JP)
(72) Inventor: TSUNEKAWA, Kazunori, Tokyo 107-8556 (JP); OSAWA, Toshifumi, Tokyo 107-8556 (JP); KOYAMA, Hiroaki, Tokyo 107-8556 (JP); NAGAHASHI, Yoshiki, Tokyo 107-8556 (JP); KATAOKA, Dai, Tokyo 107-8556 (JP); NAGATA, Wataru, Tokyo 107-8556 (JP)
(74) Representative: Dehns
(86) International application number: PCT/JP2023/010967
(87) International publication number: WO 2024/195001

(57) **Abstract**

A vehicle control device (10) which includes control means (11) for controlling an engine (30) mounted on a vehicle (100) and an electric motor (34) that enables a crankshaft (30a) of the engine (30) to rotate is provided. When an idle stop condition is satisfied, the control means (11) executes: automatic stop of the engine (30); and stop position control for braking the crankshaft (30a) rotating due to inertia by a driving force of the electric motor (34) so as to stop the crankshaft (30a) at a predetermined position (P). The stop position control includes: pre-brake control for controlling the electric motor (34) such that a rotation speed of the crankshaft (30a) decreases according to predetermined target transition information (Tne); and main brake control for controlling the electric motor such that the crankshaft (30a) is stopped at the predetermined position (P) after the pre-brake control.

## Description

### TECHNICAL FIELD

The present invention relates to a vehicle control device, a control method, and a straddle type vehicle.

### BACKGROUND ART

A vehicle having an idle stop function has been proposed from the viewpoint of environmental consideration and energy saving. Such a vehicle is advantageous in terms of improvement in fuel efficiency because the engine automatically stops when the vehicle temporarily stops at a traffic light, making it possible to contribute to the effective use of limited resources. It is desirable to smoothly restart the engine after the automatic stop of the engine so that the vehicle can be quickly started. PTL 1 proposes a technology for improving restartability by stopping a crankshaft rotating due to inertia when the engine has automatically stopped at a position that makes it easy to restart the engine.

### CITATION LIST

### PATENT LITERATURE

PTL 1: Japanese Patent No. 6070669

### SUMMARY OF INVENTION

### TECHNICAL PROBLEM

Restarting the engine may be required immediately after the automatic stop of the engine. When the engine has automatically stopped, if the crankshaft rotating due to inertia stops at a position that deviates from the predetermined position, it may not be possible to immediately respond to a request for restarting the engine.

An object of the present invention is to provide a technology for accurately stopping a crankshaft rotating due to inertia at a predetermined position when an engine automatically stops.

### SOLUTION TO PROBLEM

According to the present invention, there is provided a vehicle control device (10) comprising:
control means (11) for controlling an engine (30) mounted on a vehicle (100) and an electric motor (34) that enables a crankshaft (30a) of the engine (30) to rotate, wherein
when an idle stop condition is satisfied, the control means (11) executes:
   automatic stop of the engine (30); and stop position control for braking the crankshaft (30a) rotating due to inertia by a driving force of the electric motor (34) so as to stop the crankshaft (30a) at a predetermined position (P), and
the stop position control includes:
   pre-brake control for controlling the electric motor (34) such that a rotation speed of the crankshaft (30a) decreases according to predetermined target transition information (Tne); and
   main brake control for controlling the electric motor such that the crankshaft (30a) is stopped at the predetermined position (P) after the pre-brake control.

### ADVANTAGEOUS EFFECTS OF INVENTION

According to the present invention, a technology for accurately stopping a crankshaft rotating due to inertia at a predetermined position when an engine automatically stops can be provided.

### BRIEF DESCRIPTION OF DRAWINGS

FIG. 1 is a left side view of a straddle type vehicle according to an embodiment of the present invention.
FIG. 2 is a block diagram of a control device, a drive system, and an operation system for the straddle type vehicle of FIG. 1.
FIG. 3 is a flowchart illustrating an example of a process executed by a processing unit.
FIG. 4 is a flowchart illustrating an example of a process executed by the processing unit.
FIG. 5 is a timing chart showing an example of transition in each of a crank angle, an engine speed, and a control state during stop position control.
FIG. 6 is a timing chart showing an example of transition in each of an engine speed and a driving state of an electric motor with respect to a crank angle during pre-brake control.
FIG. 7 is a flowchart illustrating an example of a process executed by the processing unit.
FIG. 8 is a flowchart illustrating an example of a process executed by the processing unit.
FIG. 9 is a flowchart illustrating an example of a process executed by the processing unit.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <Outline of Straddle Type Vehicle>

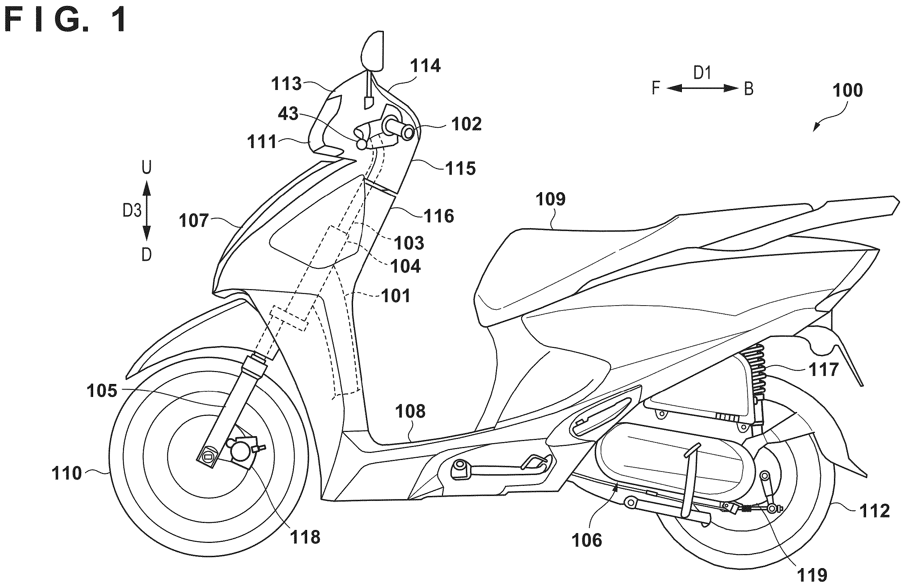

FIG. 1 is a left side view of a straddle type vehicle (hereinafter also simply referred to as a vehicle) 100 according to an embodiment of the present invention. Note that, in FIG. 1, an arrow D1 indicates a front-and-rear direction of the vehicle 100, F indicates a front side, and B indicates a rear side. An arrow D2 indicates a vehicle width direction of the vehicle 1, and L indicates a left side and R indicates a right side when viewed in a forward direction of the vehicle 100. The D1 direction and the D2 direction are horizontal directions. An arrow D3 indicates an up-and-down direction of the vehicle 100, U indicates an upward side, and D indicates a downward side.

The vehicle 100 is a scooter-type motorcycle including a step floor 108 on which a rider places his/her legs between left and right steering handlebars 102 and a seat 109 on which the rider sits. However, the present invention is also applicable to other types of straddle type vehicles.

A head pipe 104 is fixed to a front end of a vehicle body frame 101. The head pipe 104 pivotably supports a steering stem 103 extending downward from the steering handlebars 102. A pair of left and right front forks 105 rotatably supporting a front wheel 110 is fixed to a lower portion of the steering stem 103. A front wheel brake 118 for braking the front wheel 110 is supported by the pair of front forks 105. The front wheel brake 118 is, for example, a disc brake.

A front handlebar cowl 113 that supports a headlight 111 and a meter device 114 is provided across front sides of the steering handlebars 102. A rear handlebar cowl 115 is provided across rear sides of the steering handlebars 102. The meter device 114 displays various types of information such as a vehicle speed and a remaining amount of fuel. The head pipe 104 and the steering stem 103 are covered with a cover 116. A front combination lamp 107 is disposed at a front portion of the vehicle 100.

A swing-type power unit 106 is swingably supported behind the step floor 108. A rear wheel 112, which is a drive wheel, is rotatably supported by the power unit 106, and the power unit 106 rotates the rear wheel 112. A rear end portion of the power unit 106 is suspended from the vehicle body by a rear cushion 117. The power unit 106 also supports a rear wheel brake 119 that brakes the rear wheel 112. The rear wheel brake 119 is, for example, a drum brake device.

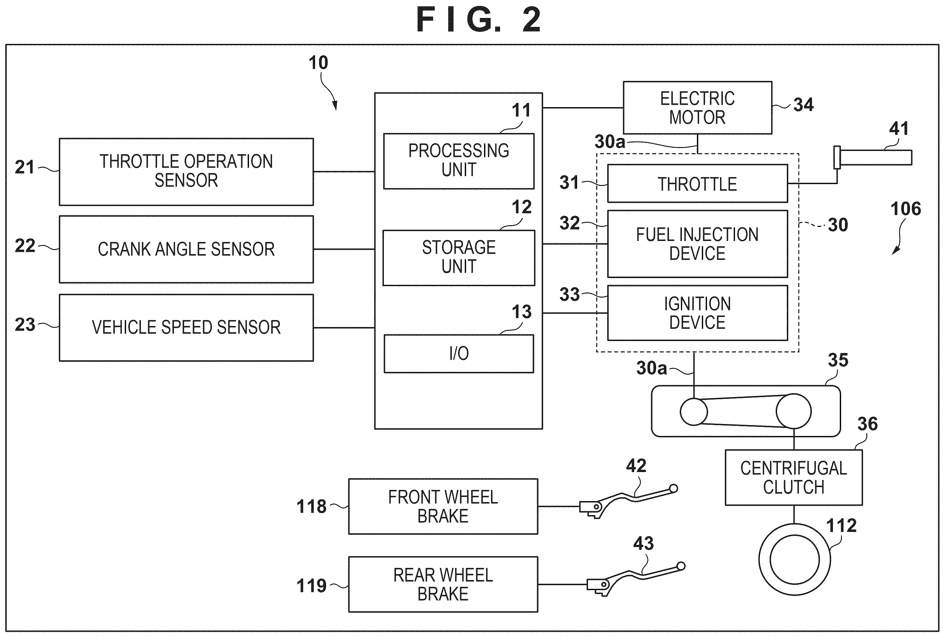

FIG. 2 is a block diagram of a control device 10, a drive system, and an operation system for the straddle type vehicle 100. The power unit 106 includes a transmission 35 and a centrifugal clutch 36 provided in a drive transmission path between an engine 30 and the rear wheel 112. The transmission 35 according to the present embodiment is a continuously variable transmission in which a belt and two variable diameter pulleys are combined, and a driving force is input to the transmission 35 from a crankshaft 30a of the engine 30 and the driving force is output from the transmission 35 to the centrifugal clutch 36. The centrifugal clutch 36 transmits the driving force from the transmission 35 to the rear wheel 112 and cuts off the transmission. The centrifugal clutch 36 is in a transmission state when a centrifugal force acts as the rotation speed of the output shaft of the transmission 35 increases, and is in a transmission cutoff state when the rotation speed of the output shaft of the transmission 35 is low.

In the present embodiment, the engine 30 is a single-cylinder four-stroke DOHC engine, and includes a throttle 31 that adjusts an air intake amount, a fuel injection device (injector) 32 that injects fuel, and an ignition device 33 that ignites a mixture in a combustion chamber. An electric motor 34 is connected to the crankshaft 30a of the engine 30. The electric motor 34 functions as a starter that starts the engine 30, and also functions as an alternator that is driven by the engine 30 to generate electric power.

A throttle grip 41 is a throttle operator provided so as to be operable by the rider and allowing the rider to adjust an opened degree of the throttle 31. The throttle grip 41 is pivotably provided on the right steering handlebar 102. In the present embodiment, the throttle grip 41 and the throttle 31 are physically connected by a mechanical wire. However, a throttle-by-wire system may be adopted in which the throttle grip 41 and the throttle 31 are not physically connected and a rider's throttle operation (accelerator operation) is converted into an electric signal to control the throttle.

A brake lever 42 is a brake operator provided so as to be operable by the rider to actuate the front wheel brake 118, which applies a braking force to the front wheel 110 of the vehicle 100. The brake lever 42 is disposed in front of the throttle grip 41. When the rider operates the brake lever 42 with his/her right hand, the front wheel brake 118 provided on the front wheel 110 is actuated, and a braking force is applied to the front wheel 110.

A brake lever 43 is a brake operator provided so as to be operable by the rider to actuate the rear wheel brake 119, which applies a braking force to the rear wheel 112 of the vehicle 100. The brake lever 43 is disposed in front of the left traveling handlebar 102. When the rider operates the brake lever 43 with his/her left hand, the rear wheel brake 119 provided on the rear wheel 112 is actuated, and a braking force is applied to the rear wheel 112.

The vehicle 100 includes a control device 10. The control device 100 is an electric circuit including a processing unit 11 represented by a CPU, a storage unit 12 such as a semiconductor memory, and an input/output interface (I/O) 13 with an external device. The control device 100 also includes a sensor signal processing circuit and an actuator drive circuit. The storage unit 12 stores programs to be executed by the processing unit 11, data (e.g., target transition information Tne to be described later) used for processing by the processing unit 11, and the like. A plurality of processing units 11 and a plurality of storage units 12 may be provided.

The control device 100 acquires detection results of various sensors 21 to 23 to control the engine 30 and the electric motor 34. The throttle operation sensor 21 detects a rider's operation on the throttle grip 41. The throttle operation sensor 21 may be a sensor provided on the throttle grip 41 to detect a pivoting amount of the throttle grip 41, or a sensor provided on the throttle 31 to detect a throttle opened degree.

The crank angle sensor 22 is a sensor that detects a rotation amount of the crankshaft 30a of the engine 30. A position (rotation position) of the crankshaft 30a and a rotation speed of the engine 30 (that is, a rotation speed of the crankshaft 30a) can be specified according to a detection result of the crank angle sensor 22. The rotation position of the crankshaft 30a may be denoted by θ. The engine 30 is a four-stroke engine, and during its four strokes, the crankshaft 30a rotates twice. Thus, θ takes a value in the range of 0 to 720 degrees, and the compression top dead center is 0 degrees. In addition, the rotation speed of the engine 30 may be denoted by Ne. The unit is rpm. The vehicle speed sensor 23 is a sensor that detects a vehicle speed of the vehicle 10, for example, a sensor that detects a rotation amount of the front wheel 110.

### <Examples of Processes>

Examples of processes executed by the control device 10 will be described. The processing unit 11 repeats each process to be described below at a predetermined cycle (e.g., several milliseconds).

### <State Data Update Process>

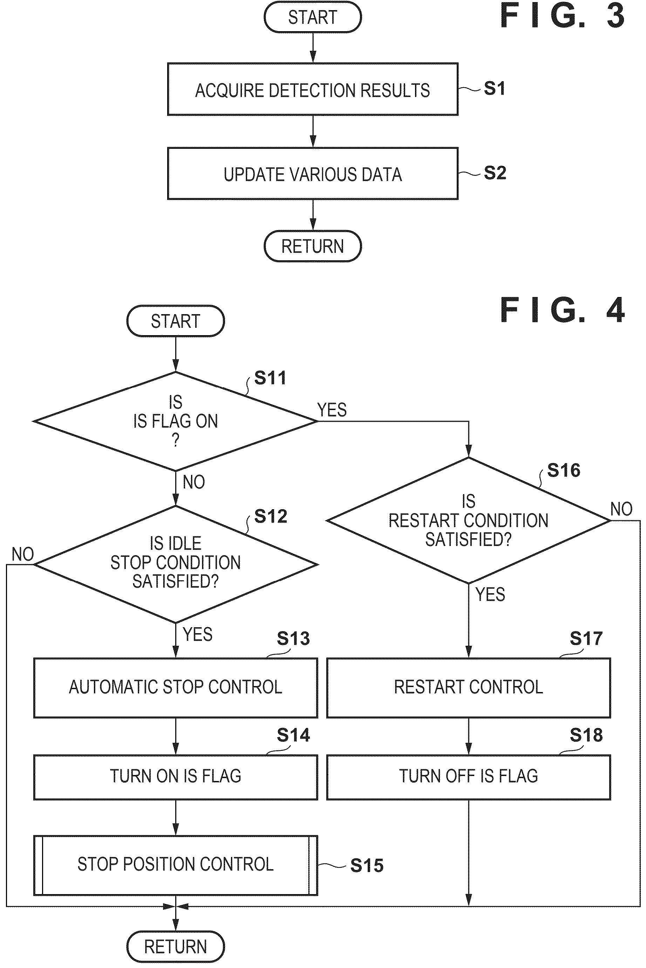

FIG. 3 is a flowchart illustrating an example of a state data update process. In this process, various types of state data are updated on the basis of the detection results of the sensors 21 to 23.

In S1, detection results of the sensors 21 to 23 are acquired. In S2, the state data stored in the storage unit 12 is updated on the basis of the detection results acquired in S1. Examples of the types of state data to be updated include a throttle state (e.g., a closed or an opened state) based on the detection result of the throttle operation sensor 21, θ and Ne based on the detection result of the crank angle sensor 22, and a vehicle speed based on the detection result of the vehicle speed sensor 23.

### <Idle Stop/Restart Control>

FIG. 4 is a flowchart illustrating an example of a process related to idle stop control. The control device 10 executes idle stop control of the engine 30. In the idle stop control, the engine 30 is automatically stopped when it is estimated that the vehicle 100 is temporarily stopped, and the engine 30 is restarted when it is estimated that the vehicle 100 starts after the automatic stop.

Note that, in the following description, an IS flag is a flag in which ON and OFF information is stored using a predetermined storage area of the storage unit 12 of the control device 10. The IS flag indicates whether or not the engine is in an idle stop state, and is switched ON in the idle stop state and switched OFF in a non-idle stop state.

Here, a predetermined position of the crankshaft 30a at which the engine 30 can be restarted more smoothly will be described. In starting the engine 30, the rotational load becomes largest when a piston passes the compression top dead center during the forward rotation of the crankshaft 30a. Therefore, when the engine 30 is stopped, the crankshaft 30a is placed at a predetermined position (e.g., a position within a range of 30 degrees after the compression top dead center, which is a position P to be described later). This position is referred to as a start preparation position. Thereafter, when the engine 30 is started, the approach period until the piston reaches the compression top dead center can be extended, and the rotational speed of the crankshaft 30a when the piston reaches the compression top dead center can be increased. As a result, the startability of the engine 30 can be improved.

Referring to FIG. 4, in S11, it is determined whether or not the IS flag is ON. When the IS flag is OFF, the process proceeds to S12, and when the IS flag is ON, the engine is currently in an idle stop state, and the process proceeds to S16. In S12, it is determined whether or not an idle stop condition is satisfied on the basis of state data. When it is determined that the idle stop condition is satisfied, the process proceeds to S13, and when it is determined that the idle stop condition is not satisfied, the process ends.

The idle stop condition can include, for example, the vehicle speed being lower than or equal to a prescribed vehicle speed (e.g., 3 km/h) and the throttle 31 being in a closed state for a prescribed time (e.g., 3 seconds). In addition, the condition may include the headlight 36 being turned off and the rider having permitted the execution of idle stop control in advance (an idle stop switch is provided and turned on by the rider).

In the present embodiment, the idle stop condition is a condition that can be established while the vehicle 100 is traveling, and does not require the vehicle 100 to be stopped (such as the vehicle speed being kept at 0 for a certain period of time). As a result, the engine 30 automatically stops while the vehicle 100 is decelerating to a stop, thereby improving fuel efficiency as compared with that in a case where the vehicle 100 is required to be stopped.

In S13, automatic stop control for automatically stopping the engine 30 is executed. For example, the engine 30 can be stopped by shutting off the supply of fuel by the fuel injection device 32 or by stopping the ignition by the ignition device 33. In S14, the IS flag is set to ON. In S16, stop position control for positioning the crankshaft 30a of the engine 30 at the start preparation position is executed. Details will be described later.

S16 to S18 are steps executed in the idle stop state of the engine 30. In S16, it is determined whether or not a restart condition is satisfied. The restart condition can be, for example, the rider having executed an operation for opening of the throttle 31 (an operation of pivoting the throttle grip 41). When it is determined that the restart condition is satisfied, the process proceeds to S17, and when it is determined that the restart condition is not satisfied, the process ends.

In S17, restart control is executed. The electric motor 34 is driven as a starter to rotate the crankshaft 30a forward, while fuel is supplied by the fuel injection device 32 and ignition is executed by the ignition device 33 to drive the engine 30. In S18, the IS flag is set to OFF.

### <Stop Position Control>

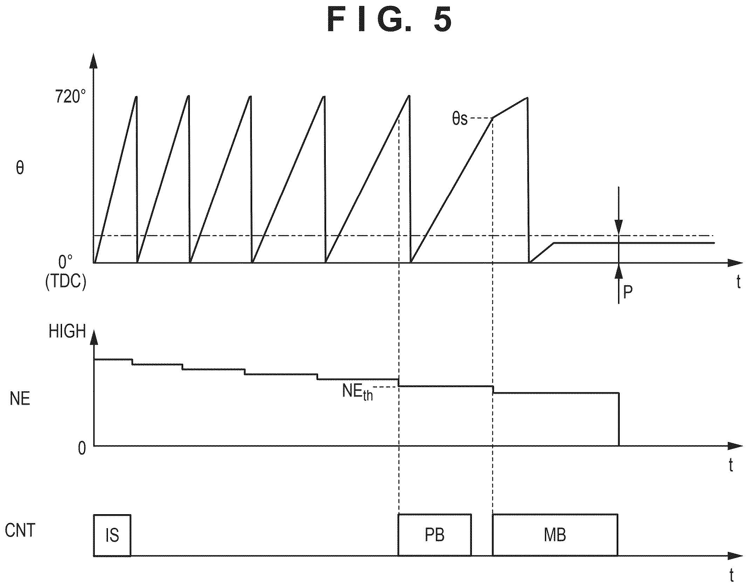

The stop position control in S15 of FIG. 4 will be described in detail. FIG. 5 is a timing chart showing an example of transition in each of the crank angle θ, the engine speed NE, and the control state CNT during the stop position control. The horizontal axis represents time. For the control state CNT, IS represents a section during which the automatic stop control (S13) is executed, PB represents a section during which pre-brake control is executed, and MB represents a section during which main brake control is executed.

In the stop position control according to the present embodiment, the crankshaft 30a rotating due to inertia after the automatic stop control (S13) is stopped within the range of the start preparation position P by a driving force of the electric motor 34. The crankshaft 30a is braked by rotating the electric motor 34 in a direction to reverse the forward rotation of the crankshaft 30a.

The main brake control is control for driving the electric motor 34 to stop the crankshaft 30a at the start preparation position P when the crankshaft 30a reaches a braking start position θs close to the start preparation position P. There is a variation when the rotational speed of the crankshaft 30a rotating due to inertia after the automatic stop decreases. For this reason, even if the main brake control is started at the same θs, the crankshaft 30a may not be stopped at the start preparation position P. Therefore, in the present embodiment, the pre-brake control is executed before the main brake control to control in advance the decrease in the rotational speed of the crankshaft 30a rotating due to inertia.

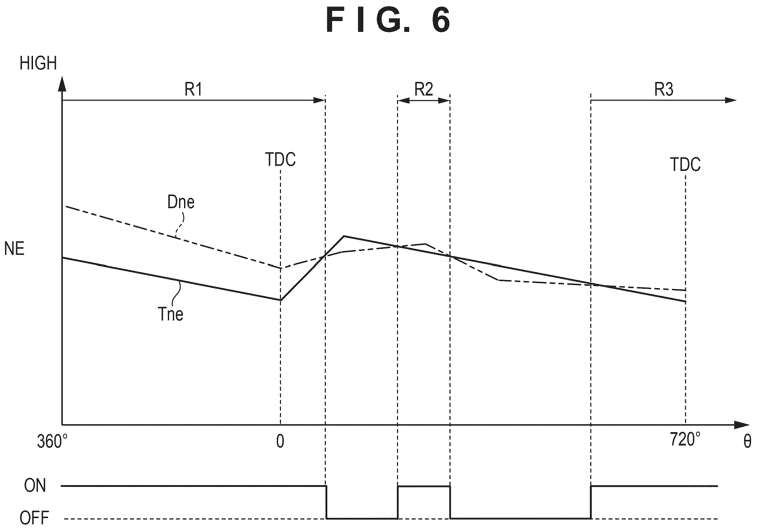

FIG. 6 is a timing chart showing an example of transition in each of the engine speed NE and the driving state of the electric motor 34 with respect to the crank angle θ during the pre-brake control. The pre-brake control is started on condition that NE becomes lower than or equal to a threshold rotation speed NEth. In the pre-brake control, the electric motor 34 is controlled such that the rotation speed NE of the crankshaft 30a decreases in accordance with predetermined target transition information Tne. The target transition information Tne according to the present embodiment defines a target value of NE with respect to θ. In the illustrated example, the target transition information Tne has a profile in which NE temporarily increases monotonically when θ exceeds 0 degrees and then decreases monotonically toward θ = 720 degrees.

By decreasing the rotational speed of the crankshaft 30a rotating due to inertia after the automatic stop in accordance with the target transition information Tne, it is possible to suppress variation in decrease of rotation, and to accurately stop the crankshaft 30a at the start preparation position P in the main brake control. If the crankshaft 30a can be stopped accurately, the frequency of subsequent position adjustments can be reduced, and the crankshaft 30a can be quickly stopped at the start preparation position P. Therefore, even if restarting the engine 30 is required immediately after the automatic stop of the engine 30, restartability can be improved. In particular, if the engine 30 automatically stops while the vehicle 100 is decelerating to a stop and restarting the engine is required immediately after the stop of the vehicle 100, restartability can be further improved because the crankshaft 30a can be positioned at the start preparation position P before the vehicle 100 stops.

In the present embodiment, PWM control is assumed as an output control method for the electric motor 34. However, in the pre-brake control, in order to further simplify the control in supplying electricity to the electric motor 34, either an ON state with a duty cycle of 100% or an OFF state with a duty cycle of 0% is selected to control the decrease in rotational speed of the crankshaft 30a. In the ON state, a braking force caused by driving the electric motor 34 acts on the crankshaft 30a. In the OFF state, the electric motor 34 is not driven, and accordingly, no braking force acts on the crankshaft 30a. "ON" and "OFF" in FIG. 6 indicate an ON state and an OFF state, respectively.

In order to decrease the rotation speed NE of the crankshaft 30a in accordance with the target transition information Tne, feedback control is used in the present embodiment. More specifically, state data regarding the rotation speed NE (referred to as a detected rotation speed Dne) is compared with the target transition information Tne, and control is executed such that the detected rotation speed Dne follows the target transition information Tne. By using the feedback control, the rotation speed NE of the crankshaft 30a can be more accurately decreased in accordance with the target transition information Tne.

Here, control may be executed such that the detected rotation speed Dne exactly matches the target transition information Tne, but when the detected rotation speed Dne is lower than the target transition information Tne, there is little need for control. Therefore, in the present embodiment, the ON state is selected when the detected rotation speed Dne exceeds the target transition information Tne, and the OFF state is selected when the detected rotation speed Dne is lower than or equal to the target transition information Tne. In FIG. 6, the ON state is selected in sections R1, R2, and R3 where the detected rotation speed Dne exceeds the target transition information Tne, suppressing an increase in rotation speed of the crankshaft 30a, and the OFF state is selected in the other sections. In this manner, by controlling the electric motor 34 only when there is a high need to adjust the rotation speed, the control can be simplified.

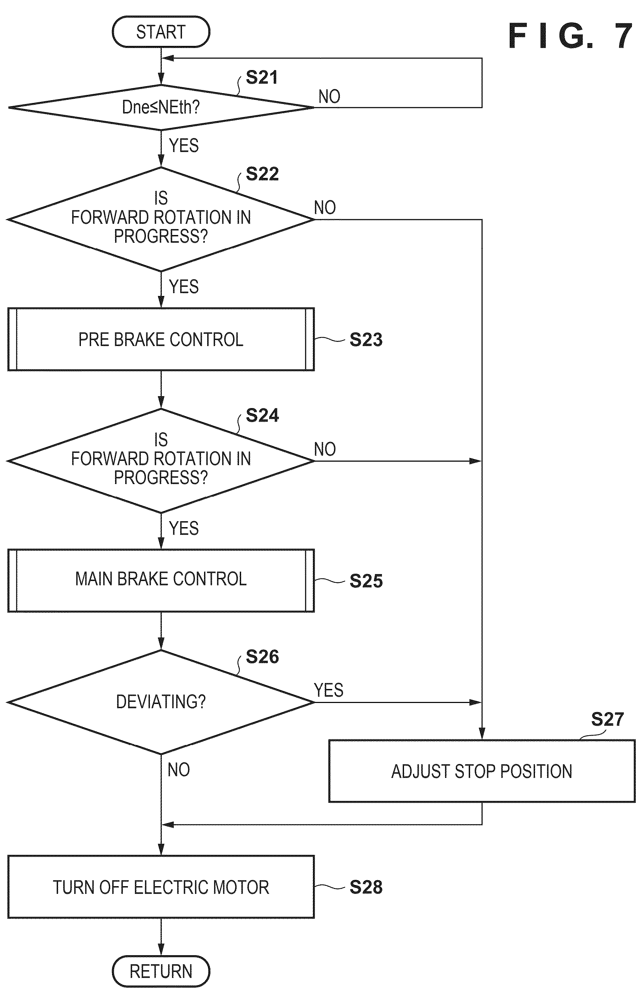

FIG. 7 is a flowchart illustrating an example of a process for the stop position control in S15 of FIG. 4. In S21, it is determined whether or not the detected rotation speed Dne is lower than or equal to the threshold rotation speed NEth on the basis of the state data. When the detected rotation speed Dne is lower than or equal to the threshold rotation speed NEth, the process proceeds to S22. The threshold rotation speed NRth is set to a rotation speed in a low rotation speed range in which the centrifugal clutch 36 is in the transmission cutoff state. Since the centrifugal clutch 36 is in the transmission cutoff state, the pre-brake control can be executed in a state where a load from the road surface via the rear wheel 112 is not transmitted to the crankshaft 30a. This makes it possible to execute control that is not affected by the traveling state, and improve the accuracy of the position at which to stop the crankshaft 30a.

In S22, it is determined whether or not the crankshaft 30a is rotating in the forward direction on the basis of the state data. When it is determined that the crankshaft 30a is rotating in the forward direction, the process proceeds to S23. When it is determined that the crankshaft 30a has already stopped or is rotating in the reverse direction, the process proceeds to S27.

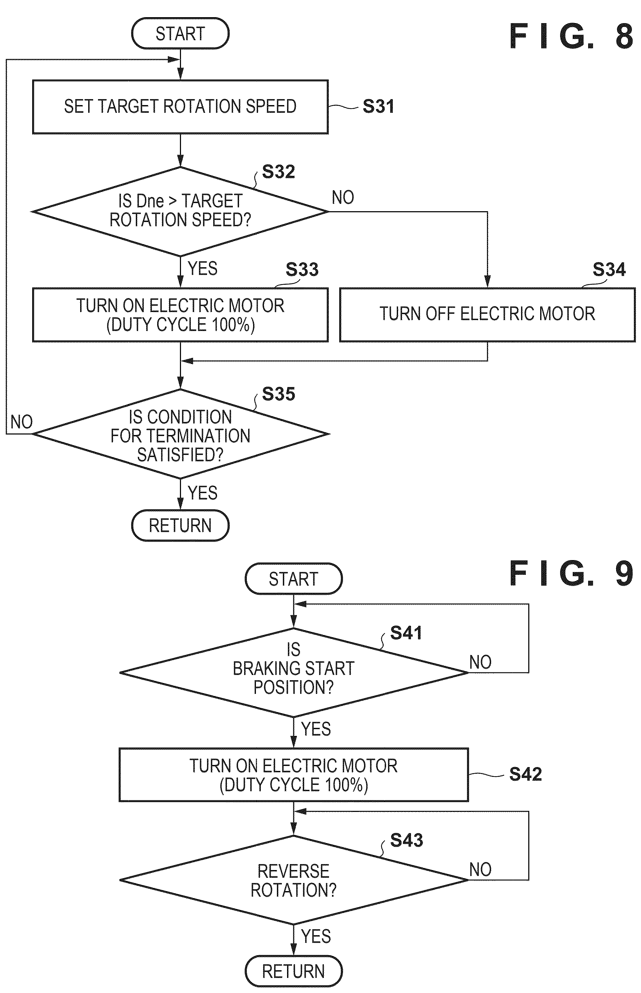

In S23, the pre-brake control is executed. FIG. 8 is a flowchart illustrating an example of a process for the pre-brake control in S23. In S31, a target rotation speed is set on the basis of the target transition information Tne, and θ based on the state data. That is, a rotation speed corresponding to a current θ among rotation speeds defined in the target transition information Tne is read out and set. In S32, it is determined whether or not a detected rotation speed Dne based on the state data exceeds the target rotation speed set in S31. When the detected rotation speed Dne exceeds the target rotation speed, the process proceeds to S33, and when the detected rotation speed Dne does not exceed the target rotation speed, the process proceeds to S34. In S33, the electric motor 34 is driven at a duty cycle of 100%. As a result, an increase in rotation speed of the crankshaft 30a is suppressed. Thereafter, the process proceeds to S35. In S34, the electric motor 34 is turned off (duty cycle of 0%), and thereafter, the process proceeds to S35.

In S36, it is determined whether or not a condition for terminating the pre-brake control is satisfied. When the condition for termination is satisfied, the pre-brake control is terminated. The condition for termination can include, for example, a detected rotation speed Dne being lower than or equal to the threshold rotation speed (< NEth), a pre-brake control execution time having reached the prescribed time, or θ based on the state data having reached the braking start position θs. When one of these conditions is satisfied, the pre-brake control may be terminated.

Referring back to FIG. 7, the description will continue. In S24, it is determined whether or not the crankshaft 30a is rotating in the forward direction on the basis of the state data. When it is determined that the crankshaft 30a is rotating in the forward direction, the process proceeds to S25, and when it is determined that the crankshaft 30a has already stopped or is rotating in the reverse direction, the process proceeds to S27. In S25, the main brake control is executed. FIG. 9 is a flowchart illustrating an example of a process for the main brake control in S25.

In S41, it is determined whether or not θ of the crankshaft 30a has reached the braking start position θs on the basis of the state data. When it is determined that θ of the crankshaft 30a has reached the braking start position θs, the process proceeds to S42. In S42, the electric motor 34 is driven at a duty cycle of 100%. The duty cycle of 100% is maintained until the main brake control is terminated, and the crankshaft 30a is stopped. The braking force can be increased by fixing the duty cycle to 100%. Since the main brake control is intended to immediately stop the crankshaft 30a, no feedback control is executed as in the pre-brake control. After S42, the process proceeds to S43.

In S43, a determination is made as to whether the crankshaft 30a has stopped. In the present embodiment, whether or not the crankshaft 30a has rotated in the reverse direction is used as a criterion. That is, in S43, it is determined whether or not the crankshaft 30a has rotated in the reverse direction on the basis of the state data. For example, when the crankshaft 30a has rotated in the reverse direction by a predetermined angle, it is determined that the crankshaft 30a has "rotated in the reverse direction". Alternatively, when the reverse rotation of the crankshaft 30a continues for a predetermined period of time, it is determined that the crankshaft 30a has "rotated in the reverse direction". Alternatively, when either can be confirmed, it is determined that the crankshaft 30a has "rotated in the reverse direction". By using the reverse rotation as a criterion, it is possible to more easily make a determination as to the stop, and it is also possible to prevent the crankshaft 30a from being erroneously recognized as having stopped when the crankshaft 30a continues to rotate forward without stopping, thereby making it possible to make a more reliable determination as to the stop. When it is determined that the crankshaft 30a has rotated in the reverse direction, the main brake control is terminated.

Referring back to FIG. 7, the description will continue. In S26, on the basis of the state data, it is determined whether or not the position of the crankshaft 30a deviates from the start preparation position P. When it is determined that the position of the crankshaft 30a does not deviate from the start preparation position P, the process proceeds to S28, and the electric motor 34 is turned off. When it is determined that the position of the crankshaft 30a deviates from the start preparation position P, the process proceeds to S27. In S27, the electric motor 34 is driven to execute control is executed for advancing or returning the crankshaft 30a to the start preparation position P. When the crankshaft 30a is positioned at the start preparation position P, the process proceeds to S28. Even if an error occurs in the pre-brake control or the main brake control, the control for stop position adjustment of S27 can reliably prepare for restart.

### <Other Embodiments>

In the above-described embodiment, it has been exemplified as a condition for starting the pre-brake control that the detected rotation speed Dne is lower than or equal to the threshold rotation speed NEth (S21). However, a requirement for θ of the crankshaft 30a may be added. For example, in the example of FIG. 5, the pre-brake control is started at a timing before θ of the crankshaft 30a is 0 degrees, but may be started at a timing after θ of the crankshaft 30a is 0 degrees.

In the above-described embodiment, the straddle type vehicle 100 including the centrifugal clutch 36 and the continuously variable transmission 35 has been exemplified, but the present invention is also applicable to a straddle type vehicle including a manual clutch and a manual transmission, and a straddle type vehicle including an automatic clutch and an automatic transmission. In either case, it is required that the stop position control be executed on the condition that the clutch is in a cutoff state.

### <Summary of Embodiments>

The above-described embodiments disclose a vehicle control device, a control method, and a straddle type vehicle in at least the following items.

### Item 1.

A vehicle control device (10) comprising:
control means (11) for controlling an engine (30) mounted on a vehicle (100) and an electric motor (34) that enables a crankshaft (30a) of the engine (30) to rotate, wherein
when an idle stop condition is satisfied, the control means (11) executes:
   automatic stop of the engine (30); and stop position control for braking the crankshaft (30a) rotating due to inertia by a driving force of the electric motor (34) so as to stop the crankshaft (30a) at a predetermined position (P), and
the stop position control includes:
   pre-brake control for controlling the electric motor (34) such that a rotation speed of the crankshaft (30a) decreases according to predetermined target transition information (Tne); and
   main brake control for controlling the electric motor such that the crankshaft (30a) is stopped at the predetermined position (P) after the pre-brake control.

According to this embodiment, it is possible to provide a technology for accurately stopping the crankshaft rotating due to inertia at a predetermined position when the engine automatically stops. If the crankshaft can be stopped accurately, the frequency of subsequent position adjustments can be reduced, and the crankshaft can be quickly stopped at the start preparation position P. Therefore, even if restarting the engine is required immediately after the automatic stop of the engine, restartability can be improved.

### Item 2.

The vehicle control device (10) according to Item 1, wherein
the idle stop condition is a condition that is establishable while the vehicle is traveling.

According to the present embodiment, it is possible to improve fuel efficiency as compared with that in a case where the engine automatically stops after the vehicle is stopped.

### Item 3.

The vehicle control device (10) according to Item 1, wherein
the vehicle (100) includes detection means (23) for detecting a position of the crankshaft (30a), and
the control means (11) executes feedback control of the electric motor (34), in the pre-brake control, based on the target transition information (Tne) and a detection result of the detection means (23).

According to the present embodiment, by using the feedback control, it is possible to more accurately decrease the rotation speed of the crankshaft in accordance with target transition information.

### Item 4.

The vehicle control device (10) according to Item 1, wherein
the vehicle (100) includes detection means (23) for detecting a position of the crankshaft (30a),
the target transition information (Tne) is information indicating a target rotation speed of the crankshaft (30a) with respect to the position of the crankshaft (30a), and
the control means (11) is configured to:
   drive the electric motor (34) such that the rotation speed of the crankshaft (30a) decreases, in the pre-brake control, when a detected rotation speed (Dne) of the crankshaft (30a) based on a detection result of the detection means (23) exceeds the target rotation speed (Tne); and
   not drive the electric motor (10) when the detected rotation speed (Dne) is lower than or equal to the target rotation speed (Tne).

According to this embodiment, it is possible to simplify the control.

### Item 5.

The vehicle control device (10) according to Item 1, wherein
the control means (11) drives the electric motor (34) by duty control, and
in the main brake control, the electric motor (34) is driven at a predetermined duty cycle without changing the duty cycle.

According to this embodiment, it is possible to increase the force of the electric motor for braking the crankshaft, and to immediately stop the crankshaft.

### Item 6.

The vehicle control device (10) according to Item 1, wherein
the vehicle (100) includes detection means (23) for detecting a position of the crankshaft (30a), and
the control means (11) stops driving the electric motor (34) in the main brake control when reverse rotation of the crankshaft (30a) is detected by the detection means (23).

According to this embodiment, by using reverse rotation as a criterion, it is possible to more easily and reliably make a determination as to stop the crankshaft.

### Item 7.

The vehicle control device (10) according to Item 1,wherein
the vehicle (100) includes detection means (23) for detecting a position of the crankshaft (30a), and
the control means (11) executes control for rotating the crankshaft (30a) to the predetermined position (P) by the electric motor (34) when it is determined based on a detection result of the detection means (23) that the crankshaft (30a) is not stopped at the predetermined position (P) by the stop position control.

According to this embodiment, even if an error occurs in the stop position control, it is possible to reliably prepare for restart.

### Item 8.

The vehicle control device (10) according to Item 1, wherein
the control means (11) is configured to:
start the pre-brake control when the rotation speed of the crankshaft (30a) becomes lower than or equal to a first rotation speed; and
terminate the pre-brake control when the rotation speed of the crankshaft (30a) becomes lower than or equal to a second rotation speed lower than the first rotation speed.

According to this embodiment, the main brake control can be executed by accurately controlling the rotation speed of the crankshaft.

### Item 9.

A control method for controlling an engine (30) mounted on a vehicle (100) and an electric motor (34) that enables a crankshaft (30a) of the engine (30) to rotate, the control method comprising:
an automatic stop step of automatically stopping the engine (30) when an idle stop condition is satisfied while the vehicle (100) is traveling; and
a stop position control step of braking the crankshaft (30a) rotating due to inertia by a driving force of the electric motor (34) so as to stop the crankshaft (30a) at a predetermined position after the automatic stop step, wherein
the stop position control step includes:
   a pre-brake control step of controlling the electric motor (10) such that a rotation speed of the crankshaft (30a) decreases according to predetermined target transition information (Tne); and
   a main brake control step of controlling the electric motor (34) such that the crankshaft (30a) is stopped at the predetermined position after the pre-brake control step.

According to this embodiment, it is possible to provide a technology for accurately stopping the crankshaft rotating due to inertia at a predetermined position when the engine automatically stops. If the crankshaft can be stopped accurately, the frequency of subsequent position adjustments can be reduced, and the crankshaft can be quickly stopped at the start preparation position P. Therefore, even if restarting the engine is required immediately after the automatic stop of the engine, restartability can be improved.

### Item 10.

A straddle type vehicle (100) comprising:
an engine (30);
an electric motor (34) that enables a crankshaft (30a) of the engine (30) to rotate; and
control means (11) for controlling the engine (30) and the electric motor (34), wherein
the control means (11) executes: automatic stop of the engine (30); and stop position control for braking the crankshaft (30a) rotating due to inertia by a driving force of the electric motor (34) so as to stop the crankshaft (30a) at a predetermined position (P) when an idle stop condition is satisfied while the straddle type vehicle (100) is traveling, and
the stop position control includes:
   pre-brake control for controlling the electric motor (34) such that a rotation speed of the crankshaft (30a) decreases according to predetermined target transition information (Tne); and
   main brake control for controlling the electric motor (34) such that the crankshaft (30a) is stopped at the predetermined position (P) after the pre-brake control.

According to this embodiment, it is possible to provide a technology for accurately stopping the crankshaft rotating due to inertia at a predetermined position when the engine automatically stops. If the crankshaft can be stopped accurately, the frequency of subsequent position adjustments can be reduced, and the crankshaft can be quickly stopped at the start preparation position P. Therefore, even if restarting the engine is required immediately after the automatic stop of the engine, restartability can be improved.

### Item 11.

The straddle type vehicle (100) according to Item 10, further comprising:
a centrifugal clutch (36) provided in a driving force transmission path between the engine (30) and a driving wheel (112), wherein
the pre-brake control is started on condition that the rotation speed of the crankshaft (30a) becomes lower than or equal to a first rotation speed at which the centrifugal clutch (36) is in a transmission cutoff state, and
the pre-brake control is terminated on condition that the rotation speed of the crankshaft (30a) becomes lower than or equal to a second rotation speed lower than the first rotation speed.

According to this embodiment, it is possible to execute control that is not affected by the traveling state and to improve the accuracy of the position at which to stop the crankshaft.

Heretofore, embodiments of the invention have been described, the invention is not limited to the foregoing embodiments, and various variations/changes are possible within the spirit of the invention.

## Claims

1. A vehicle control device (10) comprising:
control means (11) for controlling an engine (30) mounted on a vehicle (100) and an electric motor (34) that enables a crankshaft (30a) of the engine (30) to rotate, wherein
when an idle stop condition is satisfied, the control means (11) executes: automatic stop of the engine (30); and stop position control for braking the crankshaft (30a) rotating due to inertia by a driving force of the electric motor (34) so as to stop the crankshaft (30a) at a predetermined position (P), and
the stop position control includes:
pre-brake control for controlling the electric motor (34) such that a rotation speed of the crankshaft (30a) decreases according to predetermined target transition information (Tne); and
main brake control for controlling the electric motor such that the crankshaft (30a) is stopped at the predetermined position (P) after the pre-brake control.

2. The vehicle control device (10) according to claim 1, wherein
the idle stop condition is a condition that is establishable while the vehicle is traveling.

3. The vehicle control device (10) according to claim 1, wherein
the vehicle (100) includes detection means (23) for detecting a position of the crankshaft (30a), and
the control means (11) executes feedback control of the electric motor (34), in the pre-brake control, based on the target transition information (Tne) and a detection result of the detection means (23).

4. The vehicle control device (10) according to claim 1, wherein
the vehicle (100) includes detection means (23) for detecting a position of the crankshaft (30a),
the target transition information (Tne) is information indicating a target rotation speed of the crankshaft (30a) with respect to the position of the crankshaft (30a), and
the control means (11) is configured to:
drive the electric motor (34) such that the rotation speed of the crankshaft (30a) decreases, in the pre-brake control, when a detected rotation speed (Dne) of the crankshaft (30a) based on a detection result of the detection means (23) exceeds the target rotation speed (Tne); and
not drive the electric motor (10) when the detected rotation speed (Dne) is lower than or equal to the target rotation speed (Tne).

5. The vehicle control device (10) according to claim 1, wherein
the control means (11) drives the electric motor (34) by duty control, and
in the main brake control, the electric motor (34) is driven at a predetermined duty cycle without changing the duty cycle.

6. The vehicle control device (10) according to claim 1, wherein
the vehicle (100) includes detection means (23) for detecting a position of the crankshaft (30a), and
the control means (11) stops driving the electric motor (34) in the main brake control when reverse rotation of the crankshaft (30a) is detected by the detection means (23).

7. The vehicle control device (10) according to claim 1,wherein
the vehicle (100) includes detection means (23) for detecting a position of the crankshaft (30a), and
the control means (11) executes control for rotating the crankshaft (30a) to the predetermined position (P) by the electric motor (34) when it is determined based on a detection result of the detection means (23) that the crankshaft (30a) is not stopped at the predetermined position (P) by the stop position control.

8. The vehicle control device (10) according to claim 1, wherein
the control means (11) is configured to:
start the pre-brake control when the rotation speed of the crankshaft (30a) becomes lower than or equal to a first rotation speed; and
terminate the pre-brake control when the rotation speed of the crankshaft (30a) becomes lower than or equal to a second rotation speed lower than the first rotation speed.

9. A control method for controlling an engine (30) mounted on a vehicle (100) and an electric motor (34) that enables a crankshaft (30a) of the engine (30) to rotate, the control method comprising:
an automatic stop step of automatically stopping the engine (30) when an idle stop condition is satisfied while the vehicle (100) is traveling; and
a stop position control step of braking the crankshaft (30a) rotating due to inertia by a driving force of the electric motor (34) so as to stop the crankshaft (30a) at a predetermined position after the automatic stop step, wherein
the stop position control step includes:
a pre-brake control step of controlling the electric motor (10) such that a rotation speed of the crankshaft (30a) decreases according to predetermined target transition information (Tne); and
a main brake control step of controlling the electric motor (34) such that the crankshaft (30a) is stopped at the predetermined position after the pre-brake control step.

10. A straddle type vehicle (100) comprising:
an engine (30);
an electric motor (34) that enables a crankshaft (30a) of the engine (30) to rotate; and
control means (11) for controlling the engine (30) and the electric motor (34), wherein
the control means (11) executes: automatic stop of the engine (30); and stop position control for braking the crankshaft (30a) rotating due to inertia by a driving force of the electric motor (34) so as to stop the crankshaft (30a) at a predetermined position (P) when an idle stop condition is satisfied while the straddle type vehicle (100) is traveling, and
the stop position control includes:
pre-brake control for controlling the electric motor (34) such that a rotation speed of the crankshaft (30a) decreases according to predetermined target transition information (Tne); and
main brake control for controlling the electric motor (34) such that the crankshaft (30a) is stopped at the predetermined position (P) after the pre-brake control.

11. The straddle type vehicle (100) according to claim 10, further comprising:
a centrifugal clutch (36) provided in a driving force transmission path between the engine (30) and a driving wheel (112), wherein
the pre-brake control is started on condition that the rotation speed of the crankshaft (30a) becomes lower than or equal to a first rotation speed at which the centrifugal clutch (36) is in a transmission cutoff state, and
the pre-brake control is terminated on condition that the rotation speed of the crankshaft (30a) becomes lower than or equal to a second rotation speed lower than the first rotation speed.

## Amended claims

### Amended claims under Art. 19.1 PCT

1. A vehicle control device (10) comprising:
control means (11) for controlling an engine (30) mounted on a vehicle (100) and an electric motor (34) that enables a crankshaft (30a) of the engine (30) to rotate, wherein
when an idle stop condition is satisfied, the control means (11) executes: automatic stop of the engine (30); and stop position control for braking the crankshaft (30a) rotating due to inertia by a driving force of the electric motor (34) so as to stop the crankshaft (30a) at a predetermined position (P),
the stop position control includes:
pre-brake control for controlling the electric motor (34) such that a rotation speed of the crankshaft (30a) decreases according to predetermined target transition information (Tne); and
main brake control for controlling the electric motor such that the crankshaft (30a) is stopped at the predetermined position (P) after the pre-brake control,
the vehicle (100) is a straddle type vehicle comprises a centrifugal clutch (36) provided in a driving force transmission path between the engine (30) and a driving wheel (112), and
the control means (11) is configured to:
start the pre-brake control on condition that the rotation speed of the crankshaft (30a) becomes lower than or equal to a first rotation speed at which the centrifugal clutch (36) is in a transmission cutoff state, and
terminate the pre-brake control on condition that the rotation speed of the crankshaft (30a) becomes lower than or equal to a second rotation speed lower than the first rotation speed.

2. The vehicle control device (10) according to claim 1, wherein
the idle stop condition is a condition that is establishable while the vehicle is traveling.

3. The vehicle control device (10) according to claim 1, wherein
the vehicle (100) includes detection means (23) for detecting a position of the crankshaft (30a), and
the control means (11) executes feedback control of the electric motor (34), in the pre-brake control, based on the target transition information (Tne) and a detection result of the detection means (23).

4. The vehicle control device (10) according to claim 1, wherein
the vehicle (100) includes detection means (23) for detecting a position of the crankshaft (30a),
the target transition information (Tne) is information indicating a target rotation speed of the crankshaft (30a) with respect to the position of the crankshaft (30a), and
the control means (11) is configured to:
drive the electric motor (34) such that the rotation speed of the crankshaft (30a) decreases, in the pre-brake control, when a detected rotation speed (Dne) of the crankshaft (30a) based on a detection result of the detection means (23) exceeds the target rotation speed (Tne); and
not drive the electric motor (10) when the detected rotation speed (Dne) is lower than or equal to the target rotation speed (Tne).

5. The vehicle control device (10) according to claim 1, wherein
the control means (11) drives the electric motor (34) by duty control, and
in the main brake control, the electric motor (34) is driven at a predetermined duty cycle without changing the duty cycle.

6. The vehicle control device (10) according to claim 1, wherein
the vehicle (100) includes detection means (23) for detecting a position of the crankshaft (30a), and
the control means (11) stops driving the electric motor (34) in the main brake control when reverse rotation of the crankshaft (30a) is detected by the detection means (23).

7. The vehicle control device (10) according to claim 1,wherein
the vehicle (100) includes detection means (23) for detecting a position of the crankshaft (30a), and
the control means (11) executes control for rotating the crankshaft (30a) to the predetermined position (P) by the electric motor (34) when it is determined based on a detection result of the detection means (23) that the crankshaft (30a) is not stopped at the predetermined position (P) by the stop position control.

9. A control method for controlling an engine (30) mounted on a vehicle (100) and an electric motor (34) that enables a crankshaft (30a) of the engine (30) to rotate, the control method comprising:
an automatic stop step of automatically stopping the engine (30) when an idle stop condition is satisfied while the vehicle (100) is traveling; and
a stop position control step of braking the crankshaft (30a) rotating due to inertia by a driving force of the electric motor (34) so as to stop the crankshaft (30a) at a predetermined position after the automatic stop step, wherein
the stop position control step includes:
a pre-brake control step of controlling the electric motor (10) such that a rotation speed of the crankshaft (30a) decreases according to predetermined target transition information (Tne); and
a main brake control step of controlling the electric motor (34) such that the crankshaft (30a) is stopped at the predetermined position after the pre-brake control step,
the vehicle (100) is a straddle type vehicle comprises a centrifugal clutch (36) provided in a driving force transmission path between the engine (30) and a driving wheel (112), and
the pre-brake control is:
started on condition that the rotation speed of the crankshaft (30a) becomes lower than or equal to a first rotation speed at which the centrifugal clutch (36) is in a transmission cutoff state; and
terminated on condition that the rotation speed of the crankshaft (30a) becomes lower than or equal to a second rotation speed lower than the first rotation speed.

10. A straddle type vehicle (100) comprising:
an engine (30);
an electric motor (34) that enables a crankshaft (30a) of the engine (30) to rotate;
a centrifugal clutch (36) provided in a driving force transmission path between the engine (30) and a driving wheel (112); and
control means (11) for controlling the engine (30) and the electric motor (34), wherein
the control means (11) executes: automatic stop of the engine (30); and stop position control for braking the crankshaft (30a) rotating due to inertia by a driving force of the electric motor (34) so as to stop the crankshaft (30a) at a predetermined position (P) when an idle stop condition is satisfied while the straddle type vehicle (100) is traveling,
the stop position control includes:
pre-brake control for controlling the electric motor (34) such that a rotation speed of the crankshaft (30a) decreases according to predetermined target transition information (Tne); and
main brake control for controlling the electric motor (34) such that the crankshaft (30a) is stopped at the predetermined position (P) after the pre-brake control, and
the control means (11) is configured to:
start the pre-brake control on condition that the rotation speed of the crankshaft (30a) becomes lower than or equal to a first rotation speed at which the centrifugal clutch (36) is in a transmission cutoff state, and
terminate the pre-brake control on condition that the rotation speed of the crankshaft (30a) becomes lower than or equal to a second rotation speed lower than the first rotation speed.
